# EUROPEAN PATENT APPLICATION

(11) **EP 4 697 204 A1**
(43) Date of publication of application: **18.02.2026**
(21) Application number: 25188999.4
(22) Date of filing: 11.07.2025
(51) Int. Cl.: G06F 16/955

(54) **VISUAL FILE IDENTIFIERS USING CONTENT-INDEPENDENT SEMANTIC METADATA ELEMENTS**

(30) Priority: 29.07.2024 US 202418787869
(71) Applicant: SAP SE, 69190 Walldorf (DE)
(72) Inventor: LAZARUS, Mark, 69190 Walldorf (DE); BILLEN, Michael, 69190 Walldorf (DE); GEORGYAN, Gohar, 69190 Walldorf (DE); PORTISCH, Jan, 69190 Walldorf (DE)
(74) Representative: Müller-Boré & Partner Patentanwälte PartG mbB

(57) **Abstract**

Visual representations represented in computer files can undergo various changes, in terms of specific visual details in a visual representation, without changing the semantics of what is represented. The present disclosure provides techniques and solutions for generating an identifier for a visual representation using one or more content-independent semantic metadata elements. Content-independent semantic properties are those that do not correspond to individual visual elements in a visual representation, or to properties of a visual representation that do not contribute to a description of an overall semantic provided by the visual representation. Disclosed techniques can be used to identify when a visual representation is generated or imported that has the same overall semantic, as indicated by the identifier, as another visual representation. The two visual representations can have the same or different image elements. Disclosed techniques also provide that visual representations that have a different overall semantic are assigned different identifiers.

## Description

### FIELD

The present disclosure generally relates to generating identifiers for visual representations.

### BACKGROUND

Many types of software produce content in the form of visual representations, as opposed to, for example, purely textual content. For example, in enterprise software applications, users or computing processes often generate process diagrams, using formats such as Business Process Model and Notation (BPMN). The details of the content can evolve over time, yet the associated visual representation overall has the same semantics - the overall concept the image represents.

It can be useful to consider the terminology developed by Ferdinand de Saussure. In the realm of visual communication, an image can be understood as a type of linguistic sign, conveying meaning or representing something else. Within this framework, a linguistic sign, including a visual representation, includes both a signifier (signifiant) and a signified (signifié). The signifier, or signifiant, refers to the "physical" form of the linguistic sign, such as the sound pattern of a word or the visual depiction in an image. The signified, or signifié, represents the conceptual or mental concept that the signifier conveys.

For instance, consider a visual representation featuring an image of an elephant. Here, the image of the elephant serves as the signifier, while the concept of "elephant" constitutes the signified. Note that the actual depiction (signifier) of the elephant can vary - depicting an adult or juvenile elephant, or an elephant in different environments like water or land - while still signifying the same conceptual idea. An image may include multiple signified concepts, yet convey an overarching signified. For example, in an image portraying an elephant either on land or in water, where the elephant is prominently depicted, the overall signified can be understood as "elephant," despite also suggesting the concept of its environment.

In the context of enterprise software applications, consider a process model for manufacturing widgets - the signified. Over time, the steps in the manufacturing process for the widget may change, with corresponding changes in the image, the signifiant, representing the manufacturing process. However, even though the content/details of the visual representations differ, they still represent the same widget making process.

Visual representations can be used in different ways, including by multiple actors. Consider that a software vendor may provide a process model for widget manufacturing. A visual representation of the process can be sent to various organizations for use. The organizations may further alter the content, or perform actions such as renaming a file for a visual representation. It can be difficult to determine whether two visual representations represent the same overall signified, especially when there is no explicit link, available to a computing system, to determine that the two visual representations are related. Accordingly, room for improvement exists.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Visual representations represented in computer files can undergo various changes, in terms of specific visual details in a visual representation, without changing the semantics of what is represented. The present disclosure provides techniques and solutions for generating an identifier for a visual representation using one or more content-independent semantic metadata elements.

Content-independent semantic properties are those that do not correspond to individual visual elements in a visual representation, or to properties of a visual representation that do not contribute to a description of an overall semantic provided by the visual representation. Disclosed techniques can be used to identify when a visual representation is generated or imported that has the same overall semantic, as indicated by the identifier, as another visual representation. The two visual representations can have the same or different image elements. Disclosed techniques also provide that visual representations that have a different overall semantic are assigned different identifiers.

In one aspect, the present disclosure provides a process for generating an identifier for a visual representation. A first plurality of metadata elements and a first plurality of associated metadata elements values are received for a first visual representation file of a first visual representation. A rule is determined to be used in the generation of a first identifier. This rule includes a second plurality of metadata elements, with at least one of these elements being a content-independent semantic metadata element. A change in a value of a content-independent semantic metadata elements alters a signified, which is an overall meaning or concept represented by the first visual representation.

Values for the second plurality of metadata elements are retrieved from the first plurality of metadata element values. The first identifier for the first visual representation file is generated using the values of the second plurality of metadata elements.

The present disclosure also includes computing systems and tangible, non-transitory computer readable storage media configured to carry out, or including instructions for carrying out, an above-described method. As described herein, a variety of other features and advantages can be incorporated into the technologies as desired.

### BRIEF DESCRIPTION OF THE DRAWINGS

FIG. 1 illustrates two visual representations of the same process, illustrating how content of a visual representation may change without changing the semantics of the visual representation.
FIGS. 2A-2D provide an example JSON listing of various types of metadata elements and values that can be associated with a visual representation, and at least some used in creating an identifier for a visual representation.
FIG. 3 provides an example JSON listing for a visual representation using the metadata elements of FIGS. 2A-2D.
FIG. 4 is a diagram illustrating rules that include at least one content-independent semantic metadata element and optionally one or more content-dependent properties or non-semantic properties.
FIG. 5 provides a specific example of rules and hierarchical elements in FIG. 4.
FIG. 6 is an example data model illustrating how information regarding rules and hierarchical organization information can be stored by a computing system.
FIG. 7 provides example listings of visual representation identifiers and metadata elements and values used to generate such identifiers.
FIG. 9A-9C provide example pseudocode for an implementation of disclosed techniques.
FIG. 10 is a flowchart of a process of for generating an identifier for a visual representation.
FIG. 11 is a diagram of an example computing system in which some described embodiments can be implemented.
FIG. 12 is an example cloud computing environment that can be used in conjunction with the technologies described herein.

### DETAILED DESCRIPTION

### Example 1- Overview

Many types of software produce content in the form of visual representations, as opposed to, for example, purely textual content. For example, in enterprise software applications, users or computing processes often generate process diagrams, using formats such as Business Process Model and Notation (BPMN). The details of the content can evolve over time, yet the associated visual representation overall has the same semantics - the overall concept the image represents.

It can be useful to consider the terminology developed by Ferdinand de Saussure. In the realm of visual communication, an image can be understood as a type of linguistic sign, conveying meaning or representing something else. Within this framework, a linguistic sign, including a visual representation, includes both a signifier (signifiant) and a signified (signifié). The signifier, or signifiant, refers to the "physical" form of the linguistic sign, such as the sound pattern of a word or the visual depiction in an image. The signified, or signifié, represents the conceptual or mental concept that the signifier conveys.

For instance, consider a visual representation featuring an image of an elephant. Here, the image of the elephant serves as the signifier, while the concept of "elephant" constitutes the signified. Note that the actual depiction (signifier) of the elephant can vary - depicting an adult or juvenile elephant, or an elephant in different environments like water or land - while still signifying the same conceptual idea. An image may include multiple signified concepts, yet convey an overarching signified. For example, in an image portraying an elephant either on land or in water, where the elephant is prominently depicted, the overall signified can be understood as "elephant," despite also suggesting the concept of its environment.

**In** the context of enterprise software applications, consider a process model for manufacturing widgets - the signified. Over time, the steps in the manufacturing process for the widget may change, with corresponding changes in the image, the signifiant, representing the manufacturing process. However, even though the content/details of the visual representations differ, they still represent the same widget making process.

Visual representations can be used in different ways, including by multiple actors. Consider that a software vendor may provide a process model for widget manufacturing. A visual representation of the process can be sent to various organizations for use. The organizations may further alter the content, or perform actions such as renaming a file for a visual representation. It can be difficult to determine whether two visual representations represent the same overall signified, especially when there is no explicit link, available to a computing system, to determine that the two visual representations are related.

Currently, it can be difficult to determine whether two visualizations represent the same thing - the same signified. Taking the example of a visual representation of a process, metadata for the file the visual representation of the process diagram may not be transferred when the diagram itself is sent to an organization. It can then be difficult to determine whether the visual on the source system represents the same semantic as a visual representation located on another system. Accordingly, room for improvement exists.

As another example, a visual representation can be recreated for a particular signified. Without a detailed review of the original visual representation and the new visual representation, it can be difficult to determine whether the visual representations have the same overall signified. In some cases, the original visual representation may not be available, in which case it may not be possible to determine that the new visual representation corresponds to a previously represented signified.

Typical identifiers for visual representations do not convey the overall signified (hereafter, "signified" will be used to refer to the overall signified for a particular representation, unless expressly indicated otherwise or required by a particular context of the present disclosure). For example, a file for a visual representation may be automatically named or specifically assigned a name by a user, but the identifiers may not convey the signified, or at least in a way that is sufficiently free of ambiguity. Metadata for a visual representation may also fail to capture this information.

It can be useful to have an identifier, which can be referred to as a global identifier, for a particular signified. This can help ensure that different signifieds have different identifiers and that visual representations for the same signified have the same identifier. The "global identifier" can be analogized to something like a unique fingerprint or DNA sequence that is specific to an individual. Just as these biological markers can uniquely identify a person, a global identifier can uniquely identify a particular signified.

Disclosed techniques can address these and other issues using rules that involve content-independent semantic properties to generate an identifier that is associated with a particular signified. Content-independent properties are one of four types of properties, where the properties for any of the four types do not correspond to individual visual elements in a visual representation. A visual element can be defined as any distinct part or characteristic of a visual representation that contributes to its overall meaning or signified. This can include things like shapes, lines, colors, textures, or any other feature that can be visually perceived in the representation.

In the example of a process model, visual elements can include process elements and the connections between them, as these are distinct parts of the representation that contribute to its overall meaning. In the case of an image, visual elements could include any discernible feature or characteristic of the image, such as objects depicted in the image, their color, size, position, etc. In the example of a file with a visual representation of a painting, visual elements can include specific objects depicted, the colors used, the style of brush strokes, etc.

As used herein, content-independent semantic properties are those properties of a visual representation that do not directly contribute to a description of the signified (overall) of the visual representation. In particular, content-independent semantic properties do not include visual elements of a visual representation. As will be further discussed, an advantage of disclosed techniques is that it can be determined, such as by a user or a computing process (including natural language generators, such as large language models), for any particular "type" of visual representation what metadata elements/visual elements are suitable for characterization as content-independent metadata elements suitable for use in generating an identifier. Content-independent metadata can be similar to the genre of a book. Regardless of the specific words or plot details (the content), the genre (the content-independent semantic property) gives you a high-level understanding of what the book is about.

Similar considerations can allow users or computing process to characterize particular metadata elements as being related to individual visual elements or to the overall signified of the visual representation. For example, a color of an image of Albert Einstein might not be considered a visual element if it does not change the overall signified (it is still an image of Albert Einstein), making it a content-independent property (non-semantic). On the other hand, if the color does change the signified in a particular context (for example, if the image is being used in a discussion about color photography), then it could be considered a visual element, making it a content-dependent semantic property.

Content-independent (non-semantic) properties are those that may be independent of content, such as a file name or identifier, but which may not convey semantic information about the signified. Content-dependent semantic properties can describe or refer to specific content elements of a visual representation but, because changes to them may change aspects of the signified of the visual representation, they are not considered content-independent.

Content-dependent non-semantic properties can include properties that do not convey semantic information, but are dependent on content of the visual representation. From at least one perspective, file size can be considered a content-dependent non-semantic property, since the file size may change as the content of the visual representation changes, but file size does not convey semantic information. As an analogy, content-dependent, non-semantic properties can be compared to the size or format of a book. Whether a novel is a hardcover or a paperback, or whether it's printed in a large or small font, does not change the story being told (the signified).

Content-independent semantic properties can be used in establishing whether two visual representations have the signified, such as a particular process at a particular stage. As an example, taking an image file, the image file may have information about a file size. If a process is modified, the different versions of the process may have different file sizes, even though both versions represent the same process - the same signified. Thus, while file size may be considered to be content-independent, in a sense, since there is not a direct relationship between any particular visual element and the file size, the file size has no relation to what is signified by the visual representation. Just as changing the font size in a Word document might change the file size but does not change the content of the document, changing certain aspects of a visual representation might change its file size but does not change its signified.

This example also illustrates why other techniques for identifying visual representations can be problematic, and do not provide the advantages of the disclosed techniques. Consider an identifier that might be generated using file size. While the identifier that is based on the file size might be used to identify a particular visual representation on a particular system at a particular time, the identifier would change if the file size changes, even though both visual representations have the same signified. Using the book analogy, it would be similar to trying to identify a book based on the number of pages it has. Two books might have the name number of pages, but that does not mean they tell the same story.

A diagram type can be an example of a content-independent semantic property. For example, a BPMN diagram can have metadata indicating that it is of the BPMN "type." Even if the content of the visual representation changes, typically the diagram would still have the same type. However, being of BPMN type does convey semantic information about the signified of the visual representation. So, a change from BPMN type to another type indicates a more fundamental change to the signified, and, in disclosed techniques, would result in the generation of a different identifier. Similarly, using such "type" information helps ensure that visual representations with different signifieds are assigned different identifiers, including when they are created. If a visual representation with a particular signified is imported or otherwise recreated, with disclosed techniques, using content-independent semantic properties helps ensure that the same signified will be assigned the same identifier.

Note that the present disclosure does not preclude the use of other types of visual representation identifiers. For example, two visual representations for the same signified can have different file names or file identifiers, allowing them to be distinguished. However, the disclosed identifiers allow for a determination of whether the two visual representations have the same signified.

Disclosed techniques include generating a visual representation identifier using at least some content-independent semantic properties, such using values for particular metadata elements associated with a visual representation. Rulesets can be used to generate identifiers for a visual representation based on values for various metadata properties of the visual representation, including where at least one metadata element used in generating the identifier is a content-independent semantic metadata element. The ruleset can also specify an order for the properties to be used in generating the identifier.

As a particular example, a hash function can be applied to various property values for a visual representation, where the property values are combined in a specific order. Specifying an order in a ruleset, such as in a rule of the ruleset, can be advantageous, as it helps ensure that hash values are unique and that multiple visual representations having the same signified will be assigned the same identifier. If no order is imposed, the "same" visual representation may be assigned different identifiers depending on what property order happened to be used in generating the identifier.

At least some properties in a rule are selected such that a change in the property value generates a new identifier because the visual representation has a different signified, or where when an identifier is generated for a visual representation will be given a different identifier than another visual representation with a different signified. That is, for example, a user can determine what properties should be included in generating an identifier for a particular visualization, such as considering a particular software application or application process associated with the visual representation. In other words, content-independent semantic properties and changes that would indicate a new or different signified do not need to have some "absolute" definition. They can be determined when the disclosed techniques are used for a particular use case, and may differ from other use cases.

Consider a visual depiction of a particular process. There can be a visual representation of the process that is associated with a software development phase and then later with a deployment phase, where these phases can be considered semantically different enough that visual representations in the two phases should be given different identifiers, even though the visual elements in the visual representation might be identical, and where other content-independent semantic properties retain the same value.

Including a property such as "release status" can cause different identifiers to be generated when the visual representation goes from being unreleased to released, or when an identifier is generated for a visual representation in the unreleased status and an identifier is generated for a visual representation in the released state. A user can determine that, for their use case, a difference in release status is associated with a different signified, and thus consider the release status property to be a content-independent semantic property to be used in generating an identifier. In another use scenario, a user may determine that a change or difference in release status should not be associated with a changed or different signified.

In the case of a status change for a particular visual representation that is used in generating an identifier, this method of generating an identifier allows the visual representations for the pre-release and post-release versions to be tracked separately, using their different identifiers, even if other properties or identifiers of the visual representation do not change. In some cases, when a visual representation is processed and a new identifier is generated, the new identifier can be associated with the old identifier, establishing a relationship between the two visual representations, even though they have separate lifecycles.

Disclosed techniques can find other uses, including for scenarios where metadata for a visual representation, or its identifier, may be lost. For example, various metadata elements can be used to generate an identifier, and then the identifier can be stored in the visual representation itself. If it is desired to add the metadata values used in generating the identifier to the visual representation, another visual representation having the same identifier can be found, and the values for the metadata elements of that visual representation used to create the identifier to create the hash value can be copied as metadata values in the visual representation that was originally missing the values. Or, in another implementation, a ledger can be maintained that stores identifiers and metadata values used to generate those identifiers. If the identifier is available for a visual representation, the ledger can be accessed to supply metadata values.

Rulesets used for generating an identifier can change over time. Disclosed techniques can include the use of a ruleset version identifier. The ruleset version identifier can be used to help ensure that the correct ruleset is used for calculating an identifier, such as to determine whether two visualizations are the same. The ruleset version identifier can also allow, for example, new visual representations to be processed using an earlier version of the ruleset to help ensure that the new visual representation is different from a prior one, just having a different identifier because of the change in the ruleset. Similarly, older visual representations can be reprocessed using a new ruleset to generate a new identifier, which again can facilitate determining whether two visuals have the same semantic representation.

As described above, and as will be further described as the discussion proceeds, disclosed techniques can provide a variety of technical advantages, including providing improvements in identifying files in a computing system and assisting in system interoperability. Disclosed techniques are inherently computer-implemented, as they involve a computing process retrieving metadata values stored in a computing system.

### Example 2- Example Visual Representations and Associated Metadata

The present disclosure can be used with a variety of visual representations. As explained, disclosed techniques involve generating identifiers that can be used to determine whether two visual representations represent the same signified or not, without reference to the actual content of the visual representation. The present disclosure proceeds with a discussion of how disclosed techniques can be used with visual representations of processes, such as processes that might be defined in BPMN or UML (Unified Modelling Language). However, the techniques can be used with other visual representations, provided that, as will be further explained, there is content-independent semantic metadata that can be used in generating an identifier for the visual representation.

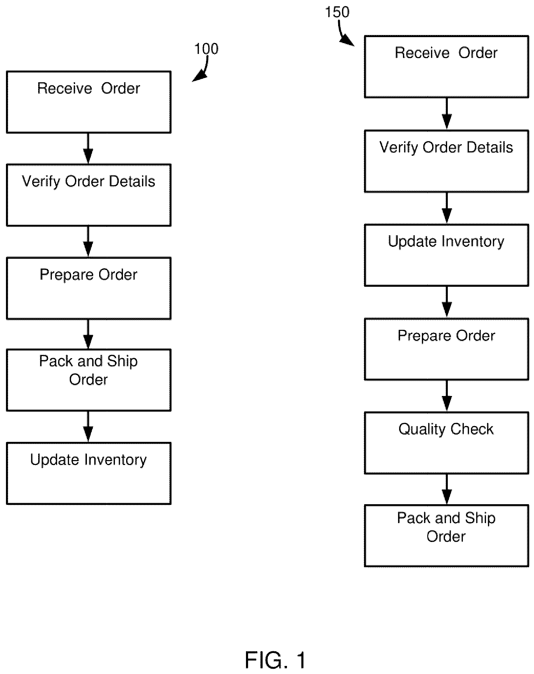

FIG. 1 illustrates two visual representations 100, 150 of a process for fulfilling orders. Compared with the implementation 100, implementation 150 adds steps to the implementation 100, and some of the operations that are in implementation 100 are performed in a different order in the implementation 150. Although the implementations 100, 150 have different operations and sequences, they both represent the same process - the same signified.

Disclosed techniques, at least in some scenarios, would maintain the same identifier for the implementation 100 and the implementation 150. As the term "modified" is used herein, this can be referred to as the implementation 150 being a modification to the implementation 100. Modifications typically do not result in a new identifier being generated, as they do not provide a significant enough change to the signified. Rules for generating identifiers for the implementations 100, 150 thus are not concerned with the details of the individual elements of the process, including in its visual representation.

As will be explained in greater detail, properties of a visual representation can be selected for inclusion in a ruleset for generating identifiers that indicate that two visual representations are not sufficiently similar in their signifieds to be considered the same. In some cases, having different identifiers can indicate that the underlying visual representations have no direct relationship, as well as not having the same signified. In other cases, having different identifiers can result from one visual representation being a version of another visual representation. **In** these scenarios, an association between the visual representations can be maintained, as well as an indication that the two visual representations are different versions of the same signified, and information that can be used to establish a version sequence for the visual representations.

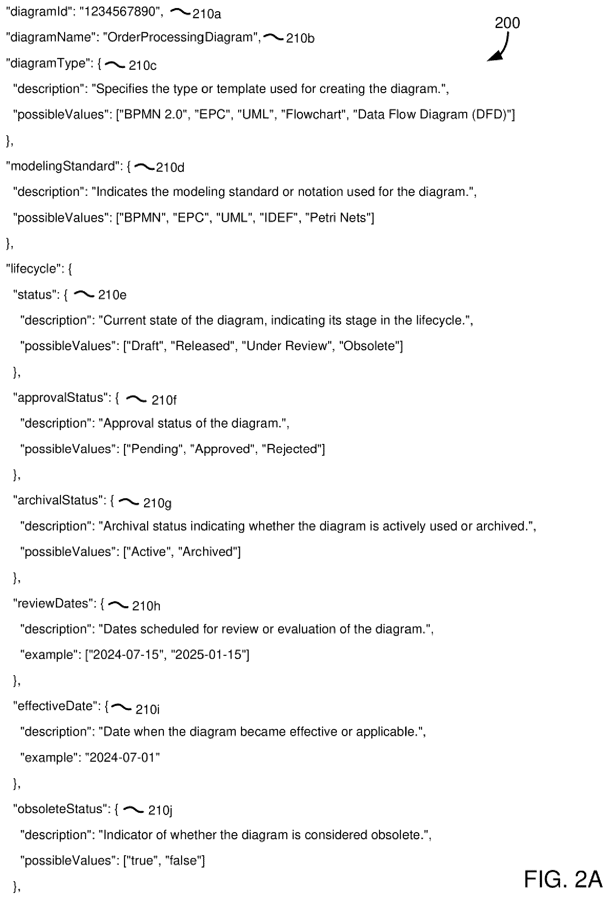

FIGS. 2A-2D illustrates example metadata 200 that can be maintained for a visual representation of a process. Metadata 200 can include an identifier 210a for the visual representation and a name 210b for the visual representation. The metadata 200 includes a type 210c for the visual representation and a modelling standard or notation 210d used to define the visual representation.

The metadata 200 can include one or more properties that provide lifecycle information for the visual representation. Element 210e provides a status of the visual representation, such as whether the visual representation is in a draft stage or if it has been released - being used in an enterprise software production environment. Visual representations may require approvals before they can be released or otherwise advanced in a life cycle, which can be indicated using element 210f.

Element 210g indicates whether the visual representation has been archived or if it is active, while element 210j can be used to indicate whether the visual representation is obsolete. It may be useful to indicate when a visual representation was last reviewed or is to be reviewed, indicated using element 210h. Element 210i provides an effective date for the visual representation.

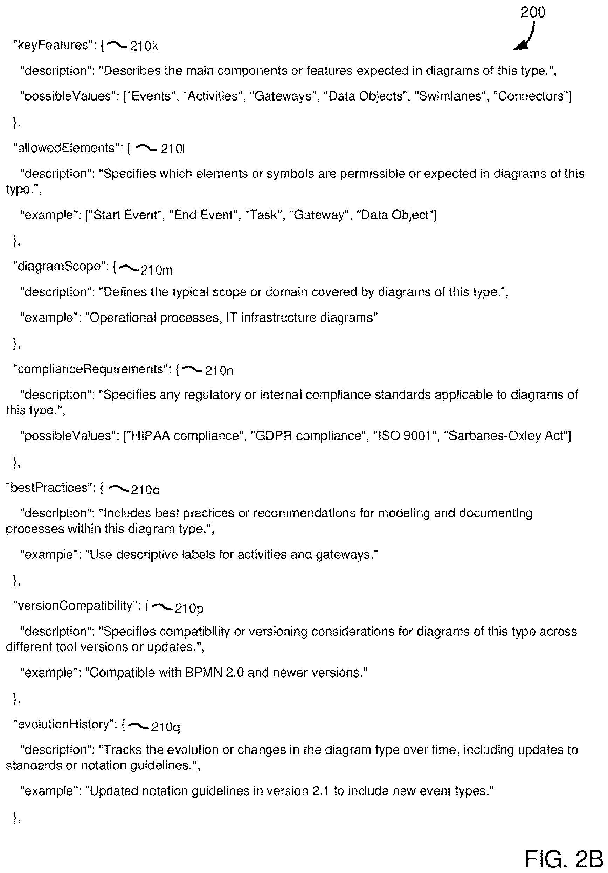

The metadata 200 provides a list of the main features 210k of the visual representation, and types of elements 210l that can be included in the visual representation. Element 210m provides an indication of a general subject matter area for the visual representation. The metadata 200 includes information about compliance requirements 210n for the visual representation. Turning to FIG. 2B, element 210o indicates best practices for creating or editing the visual representation, while element 210p indicates what software or modelling standards the visual representation is compatible with. The metadata 200 includes information 210q describing changes made to the visual representation, as well is information 210r describing how the visual representation can be exported for use by various types of software. Similarly, element 210s describes data exchange formats supported by the visual representation.

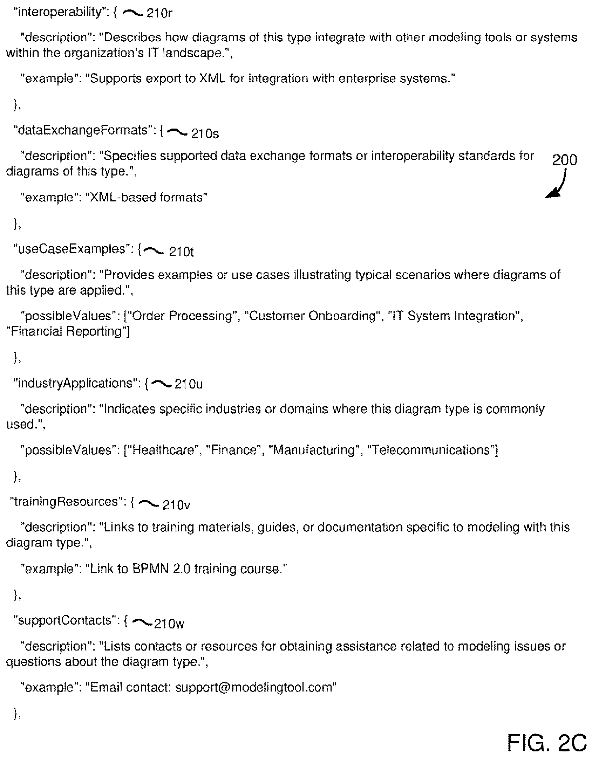

Information about any use case examples provided by the visual representation 210t can be included in the metadata 200, as can information about industries where the process of the visual representation might be relevant 210u. In FIG. 2C, element 210v provides information about resources that can be used in understanding, creating, or modifying the visual representation, while element 210w provides contact information for support personal who can be contacted regarding issues with the visual representation or who can assist in using, creating, or modifying the visual representation. Element 210x provides tags that can be accessed, such as in search processes, while element 210y provides links to documentation describing the visual representation or visual representation type.

Other types of metadata can be included in the metadata 200, including content-dependent metadata, content-dependent semantic metadata, or content-independent metadata (that does not provide semantic information). In this example, content-dependent metadata can include information such as specific elements of the visual representation and their relationships, the number of elements, or attributes describing the process, such a duration, frequency or cost. Annotations, such as comments and notes, can also be considered content-dependent.

Information such as file size and date modified/created can also be considered content-dependent. For example, a file size can indicate that content of the visual representation has changed. For date created/modified, this also typically implies some kind of change to the document content. As described, it can be beneficial to include content-independent semantic properties in generating an identifier for a visualization. Take "date modified" for example. If "date modified" was used in generating an identifier, a new identifier would be generated every time the visual representation was modified, even though the visual representation always represents the same "thing" - the same signified.

The metadata 200 provides metadata elements that can be used in generating an identifier, optionally along with one or more types of metadata elements. However, not all properties, represented as metadata elements, are used in generating an identifier. Rather, specific properties are selected such that, when a value changes of a metadata element used in creating an identifier, it is appropriate to consider the two visual representations to be directed to a different signified, even if one visual representation can be considered as a version of, or otherwise related to, the other.

As an example, a visual representation can have metadata of an identifier of an organization associated with the visual representation. Changing the organization identifier can indicate that the visual representations should be treated separately - they now represent different semantic concepts (signifieds). Although two visual representations for two organizations might be for a similar overall process, the visual representations are now conceptually different. This can be true even if the content of the visual representations is identical. While the content of each visual representation may change, and disclosed techniques may not update an identifier of the visual representation based on such changes, it is appropriate to treat the two visual representations as conceptually different if the organization identifier changes.

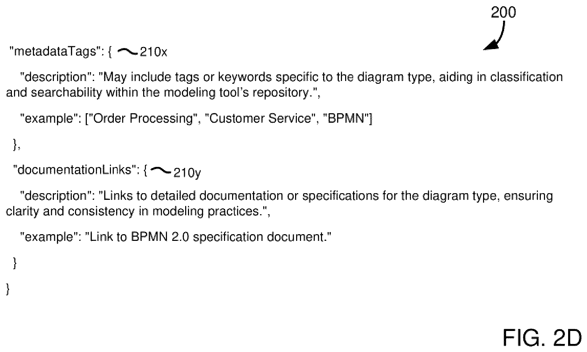

With reference to the metadata 200 of FIG. 2, the visual representation type indicated by element 210c can describe a concept of the visual representation, and so visual representations with different types are typically conceptually different, and changing a visual representation from one type to another may indicate that the visual representation of the new type should be treated conceptually independently of the original visual representation and its type.

Again, the set of metadata elements used to create an identifier for a visual representation can differ for different visual representations, even for visual representations within a same general field or category. For example, different types of process visual representations can be associated with different rulesets defining different sets of the properties 210 of the metadata 200 to be used in identifier generation. For some visual representations, it may be useful to distinguish between visual representations, even as different versions of a visual representation, based on an approval or release status, indicated by elements 210f and 210e. For other visual representations, this information may not reflect a conceptual difference that is significant enough to justify different identifiers.

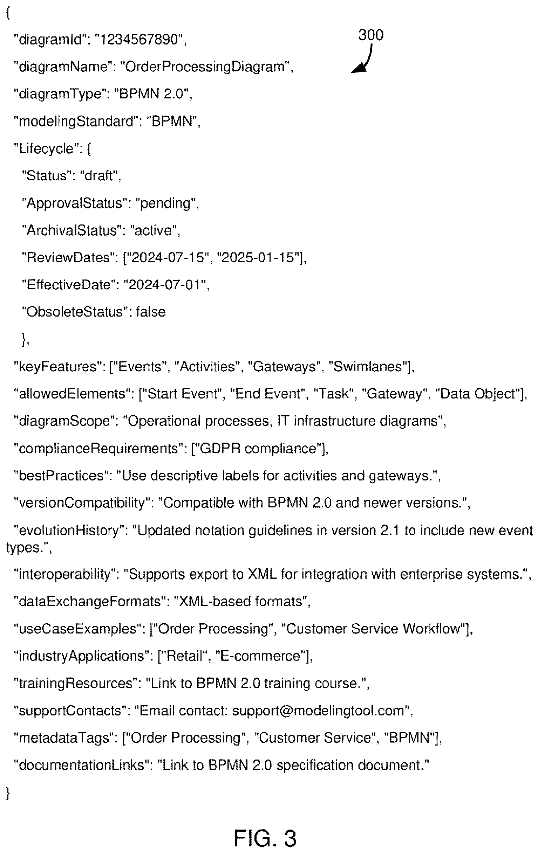

FIG. 3 provides an example JSON listing 300 for an example process visual representation, including values for the metadata elements 210 of the metadata 200 of FIG. 2.

### Example 3- Example Hierarchical Categorization of Identifier Generation Rules

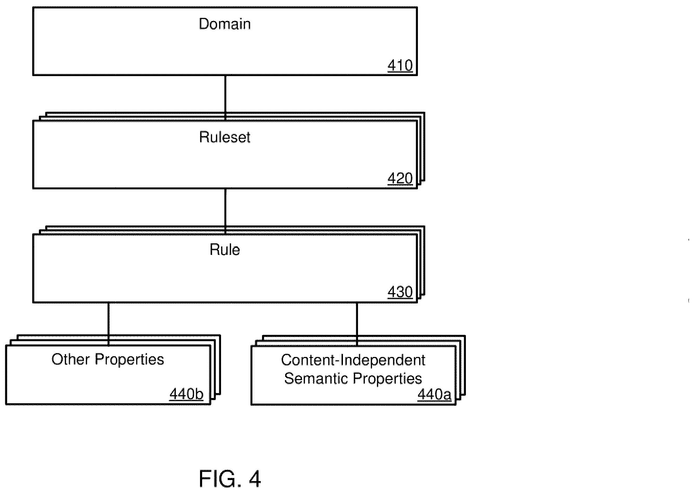

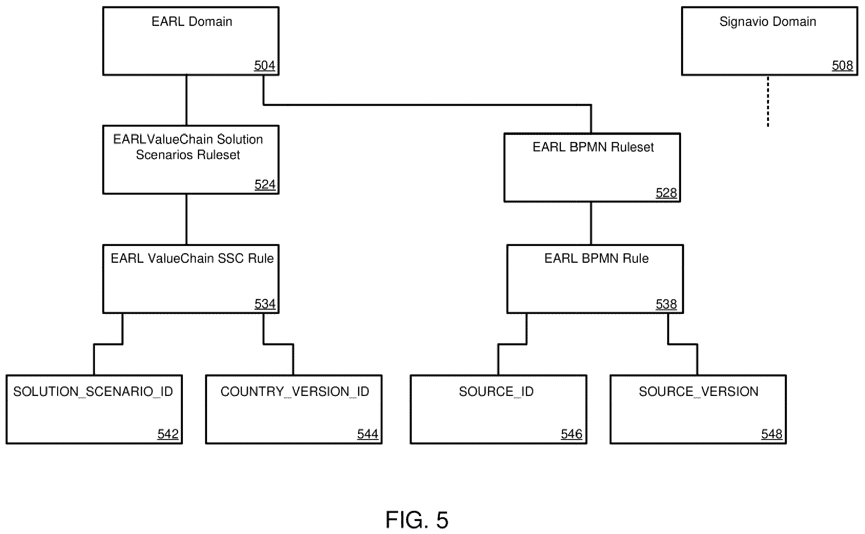

FIG. 4 is a diagram illustrating how identifiers for visual representations can be generated and rules for generating them can be organized. FIG. 4 illustrates components used in identifier generation and rule organization , generally, while FIG. 5 provides an example specific to products of SAP SE, of Walldorf, Germany.

At a most general level, rules for generating visual representation identifiers can be organized by domain 410. Generally, a domain 410 identifies a particular area or scope of a broader conceptual level - a source of data on a specific topic. A domain 410 can define an overall class of a visual representation.

Domains 410 can act as namespaces, which can help avoid conflicts between rulesets 420, rules 430, and properties 440 (shown as properties 440a and 440b) used in generating visual representation identifiers. Domains 410 can make accessing rulesets 420 and rules 430 more computationally efficient, as will be further described.

FIG. 5 includes a domain 504 for the SAP Enterprise Architecture Library ("EARL") and a domain 508 for SAP Signavio. For simplicity of presentation, only the domain 504 is depicted and discussed in detail.

In FIG. 4, a domain 410 is associated with one or more rulesets 420. Rulesets 420 can be defined for particular types of visual representations. In FIG. 5, for the EARL domain 504, examples of rulesets 410 include EARL Valuechain Solution Scenarios Ruleset 524 and EARL BPMN (Business Process Model and Notation) Ruleset 528. EARL Valuechain Solution Scenarios typically reflect a higher-level analysis of processes used by an organization, such as actions across various functions and departments to achieve a particular outcome that provides business value. BPMN diagrams typically focus on specific processes, at a more operational level. As an example, a valuechain process may describe an end-to-end process for order fulfillment, and can include actions such as strategic planning, procurement, production, inventory management, and logistics. A BPMN diagram can represent a specific process in order fulfillment, such as "pack and ship," which can include actions such as verifying order details, preparing an order, packing items in the order, and shipping the items.

Rulesets 420 are associated with one or more rules 430. A rule 430 defines a selection of properties 440 used in a ruleset 420, and defines an order of properties in the rule. As discussed, the order is followed when generating a visual representation identifier. Thus, otherwise identical rulesets 420 and rules 430 will yield different identifiers if they process properties 440 in different orders.

When multiple rules 430 are present for a ruleset 420, all of the rules are used in generating an identifier, and an order can be specified for the rules, where properties for the rules will be combined first within the order specified within the rule, and second within the order specified for the rules. For example, if a ruleset RS1 has a rule R1, with properties P2 and P4, considered in that order, and a rule R2 with properties P1 and P3, considered in that order, and R2 is specified as being before R1, the identifier will be generated using the properties P1, P3, P2, P4, in that order.

The properties 440 are shown as one or more content-independent semantic properties 440a and one or more other types of properties 440b. In a particular implementation, a rule 430 includes at least one content-independent semantic property 440a. Typically, a rule 430 includes multiple content-independent semantic properties 440a. Again, the number and identity of the content-independent semantic properties 440a used in a rule 430 can be selected such that the combination of such properties captures when what is signified by the visual representations is sufficiently different to be consider the visual representations as having different signifieds.

In the implementation, the rule 430 can optionally include one or more other types of properties 440b, such a content-independent non-semantic properties or semantic or non-semantic content dependent properties. Including other types of properties 440b can be useful, such as to help avoid hash collisions. Typically, however, other properties 440b are selected that are not expected to change, are sufficiently stable, without a corresponding change in a content-independent semantic property 440a that would cause the identifier to change.

In the EARL scenario, the EARL ValueChain SSC Ruleset 524 includes an EARL ValueChain SSC Rule 534, which is defined with respect to a SOLUTION_SCENARIO_ID property 542 and a COUNTRY_VERSION_ID property 544, considered in that order. Thus, diagrams that are directed to different solution scenarios or are intended for different countries would be considered to be directed to different signifieds. The EARL BPMN Ruleset 528 includes an EARL BPMN rule 538 that is defined with respective to a SOURCE_ID property 546 and a SOURCE_VERSION property 548, which are processed in that order. So, diagrams that have different source identifiers, or use different versions of a particular source, would be considered to be directed to different signifieds.

### Example 4- Data Model for Storing Hierarchical Categorizations of Identifier Generation Rules and Rule Definitions

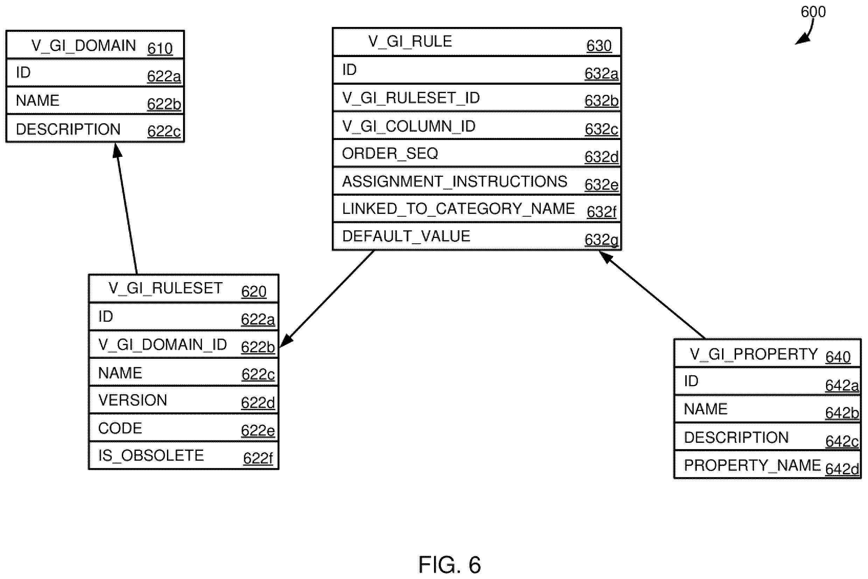

FIG. 6 provides a data model 600 that can be used to store information about the domains 410, rules 420, rulesets 430, and properties 440 of FIG. 4. The components of the data model 600 can be implemented in various manners, such as relational database tables, in JSON or XML representations, or as instances of abstract or composite data types, among others.

A computing object 610 for a domain includes attributes (such as fields/columns of a database table or data members of an abstract or composite datatype) of an identifier 612a, a name 612b, and a description 612c.

A ruleset object 620 includes attributes of an identifier 622a and a domain identifier 622b, where the domain identifier has a value corresponding to a value of the attribute 612a of an instance of the domain computing object 610. The ruleset object 620 also includes a name attribute 622c and a version identifier 622d. As will be described, how an identifier is generated can change over time, and so it can be useful to maintain version information for rulesets, such as if a definition of the how the identifier is generated changes, but then an identifier created using an older version of the ruleset needs to be updated. Version identifiers can also be used when it is desired to update identifiers that were generated using a previous version of the identifier definition.

An attribute 622f can be used to identify when a ruleset is obsolete (where a ruleset for a domain that is not obsolete can represent a current/active version of the ruleset). An attribute 622g provides a code for the ruleset, which can be a shorthand way to refer to the ruleset and, in a particular implementation, can be provided as an argument when a method for generating an identifier is called.

A rule object 630 represents a particular collection of properties to be used in generating an identifier, as well as a sequence in which those properties are processed in generating an identifier. The rule object 630 includes an identifier attribute 632a, as well as an attribute 632b identifying an instance of the ruleset object 620 with which the rule is associated. The value of the attribute 632b is a value of the attribute 622a of the ruleset object 620.

The rule object 630 includes an attribute 632c that identifies particular properties used by the rule, such as by providing an identifier of a property. A rule object 630 can include multiple properties, and so, in some cases, the attribute 632c can store multiple values, including in a data structure such as an array or vector. When the rule object 630 corresponds to a table, such as a relational database table, the properties can form columns of the table.

For a rule object 630, an attribute 632d stores a sequence in which properties used by the rule are processed. An attribute 632e can store information about how properties should be considered for assignment to a rule object 630, or how values for such properties should be assigned. Rules can be associated with particular categories, which can be indicated by a value for an attribute 632f. In some cases, a visual representation may lack a value for a particular property, and a default value can be provided in attribute 632g. Although not shown, the rule object 630 can also include a sequence attribute that specifies its processing position when a ruleset includes multiple rules.

A property object 640 can correspond to a particular metadata element for a visual representation that is used in generating an identifier for the visual representation. The property object 640 can include an identifier attribute 642a. The identifier attribute 642a can be used as a value of the attribute 632c of the rule object 630. The property object 640 also includes an attribute 642b providing a property name and an attribute 642c providing a description of the property. An attribute 642d provides a property name, which can be a name for a property used in association with computing objects other than a database property object 640. For example, values of the property name attribute 642d can serve as keys in key-value pairs for specific properties, such as when metadata for a visual representation includes the information used in generating its identifier (using the appropriate ruleset version).

That is, for example, the property name attributes 642d can be included a section of a JSON listing for a visual representation that includes the identifier and values use to generate the identifier. The JSON listing can also identify the ruleset, including its version, used to generate the identifier. An order in which the properties are considered can be indicated in the listing, or it can be assumed that the properties are listed in the order used to generate the identifier. An example JSON listing is:

```
       {
         "document": {
            "identifier": "1234567890abcdef",
            "metadata": {
              "GUID_Property1 ": "value1",
              "GUID_Property2" : "value2",
              "GUID_Property3": "value3",
              // ... additional properties ...
            },
            "ruleset": {
              "name": "Ruleset1",
              "version": "1.0"
            }
         }
       }
```

### Example 5- Example Identifiers

In generating an identifier for a visual representation, the domain is determined. From the determined domain, a ruleset can be selected that is appropriate for the visual representation. From the selected ruleset, the appropriate rule or rules are determined. The domain and ruleset can be thought of as higher-level categories and subcategories that are used to organize rules. Once the appropriate rule or rules are determined, values for properties defined in the rule can be determined for the visual representation and processed in an order defined by the rule, and considering an ordering of rules if multiple rules are used, to provide an identifier.

In a specific example, property values are concatenated, such as in an order specified by the rule, and that value is used as input to a hash function. The resulting hash value can serve in whole or part as an identifier for the visual representation. To assist in processing the identifiers, the hash value can be concatenated with the domain name. Suitable hash functions include MD5, SHA-1, SHA-256, SHA-3, Whirlpool, RIPEMD-160, MurmurHash, CityHash, FNV, DJBX33A, SuperFastHash, or xxHash.

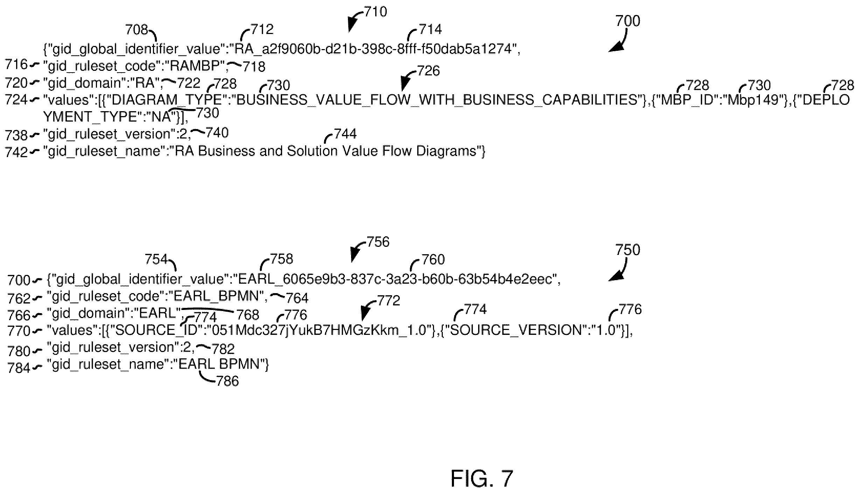

FIG. 7 illustrates two examples 700, 750 of how domain, ruleset, rules, and property values can be used to generate global identifiers. The examples 700, 750 are in key:value format, such as used in JSON. The example 700 includes a key 708 for an identifier value, here referred to as a global identifier value. The value 710 for the key 708 includes the domain identifier 712 and the hash value 714, calculated using the appropriate rule and property values for the particular diagram that was processed.

The example 700 includes a key 716 and value 718 for a code of a ruleset used to generate the identifier and a key 720 and value 722 for the domain associated with the ruleset. A key 724 represents properties used in calculating the hash value, where each property in a set of values 726 for the key 724 in turn includes a key 728 for the property (identifying the property) and a value 730 indicating the value of the property for the particular diagram being processed.

Thus, it can be seen in example 700 that property values are included for the properties of DIAGRAM_TYPE, MBP_ID, and DEPLOYMENT_TYPE. Concatenating the property values 730 in the order shown provides "BUSINESS_VALUE_FLOW_WITH_BUSINESS_CAPABILITIESMbp149NA". This value is input to a hash function to generate the value of "a2f9060b-d21b-398c-8fff-f50dab5a1274," which is then concatenated with the domain name to provide the final identifier value of "RA_a2f9060b-d21b-398c-8fff-f50dab5a1274."

The use of the hash value, and concatenation with the domain identifier, can provide a number of performance improvements in a computing system. The use of a hash function helps ensures a unique value for any input, and also provides output of a fixed-size. In the specific example of where a ledger of identifiers is maintained in a relational database, the fixed size can make the indexing process more efficient, as the index size remains constant regardless of the size of the input data.

The identifier allows for a logical grouping of related identifiers. Visual representations, and their identifiers, belonging to the same domain are likely to have similar properties and are often accessed together. By storing these identifiers contiguously in memory, the system can leverage spatial locality to reduce the number of memory fetch operations, thereby speeding up data retrieval. The concatenated identifier (domain name + hashed value) forms a composite key that can be used for more efficient querying in a relational database. Composite keys can significantly speed up query performance as they allow the database to filter on multiple columns at once.

As discussed, it can be useful to store information about rulesets and ruleset versions used in generating the identifier. Key 738 corresponds to the ruleset version, and a value 740 of "2" is provided. Key 740 corresponds to the name of the ruleset, here, with value 744 of "RA Business and Solution Value Flow Diagrams".

Example 750 corresponds to the example identifier generation hierarchy shown in FIG. 5. A key 754 for the identifier has a value 756 that incorporates the domain 758, in this case the EARL domain 504, and a value 760 that is a hash value produced using the property values identified using a rule for the diagram for which the identifier is generated. A key 762 has a value 764 corresponding to a ruleset code for the EARL BPMN Ruleset 528. A key 770 represents properties used in calculating the hash value, where each property in a set of values 768 for the key 766 in turn includes a key 770 for the property (identifying the property) and a value 772 indicating the value of the property for the particular diagram being processed.

Thus, it can be seen in example 750 that property values are included for the properties of SOURCE_ID and SOURCE_VERSION. Concatenating the property values 772 in the order shown provides "051Mdc327jYukB7HMGzKkm_1.01.0". This value is input to a hash function to generate the value of "6065e9b3-837c-3a23-b60b-63b54b4e2eec," which is then concatenated with the domain name to provide the final identifier value of "EARL_6065e9b3-837c-3a23-b60b-63b54b4e2eec." Ruleset version and ruleset identifiers are provided in key value pairs 780, 782 and 784, 786.

### Example 6- Example Identifier Generation Process

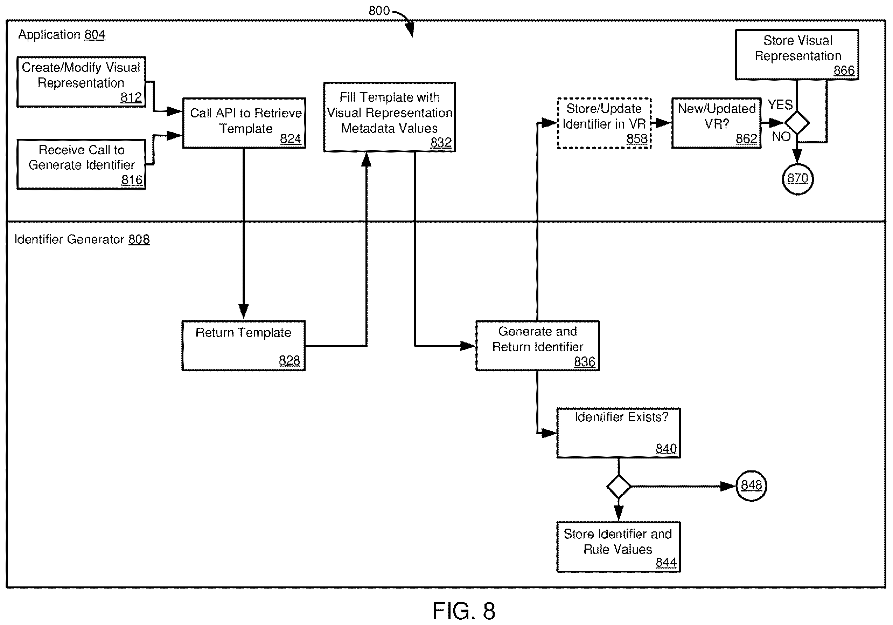

FIG. 8 is a swimlane diagram for a process 800 of generating an identifier for a visual representation. The process 800 is performed by a software application 804 that is used to create, edit, or manage visual representations, and an identifier generator 808.

At 812, a visual representation is created or modified. Creation can include importing a visual representation from another system. Creating or modifying the visual representation causes identifier generation operations to be performed.

Alternatively, a call to generate an identifier is received at 816. For example, visual representations may already exist, and it may be desired to generate an identifier for such a visual representation, even though the visual representation is not being created and is not currently being modified. For example, it may be desired to generate an identifier for an existing visual representation based on an updated ruleset or rule, or otherwise using a different ruleset or rule than used to create an identifier already assigned to a visual representation. **In** some scenarios, it may be desired to determine whether two visual representations are the same, in which case the call at 816 may be to generate identifiers for one or both visual representations.

**In** the specific example of FIG. 8, an application programming interface (API) call is made at 824 to the identifier generator 808 to retrieve a template for the visual representation. The template specifies metadata elements that are used to determine an identifier value for the visual representation. At 828, the identifier generator 808 receives the call and returns the appropriate template to the software application 804 at 828. Referring to example 700 of FIG. 7, an example template can be:

| Property | Value |
|---|---|
| DIAGRAM_TYPE | |
| MPB_ID | |
| DEPLOYMENT_TYPE | |

Determining the appropriate template can be performed in a variety of ways. In one technique, metadata for the visual representation, which can overlap or not with metadata elements used to generate the identifier, is analyzed to determine the appropriate rule to be used, and thus the corresponding template. For example, the metadata can include element having values corresponding to values for a domain identifier, a ruleset identifier, and a rule identifier. The template for the rule is determined using the corresponding values in the metadata of the visual representation being processed.

In another technique, one or more of the above values can be determined in another manner, such as based on information associated with the software application 804 or information included by the software application in the API call made at 824. For example, the software application 804 can maintain a context for the visual representation that includes the relevant metadata elements and specific values, even if some or all of these values are not maintained in the visual representation's metadata.

In a further technique, the identifier generator 808 associates the software application 804 with one or more of the domain, ruleset, or rules, and uses this information to retrieve to retrieve the correct template.

At 832, the application 808 fills the template with the corresponding metadata values, and then calls the identifier generator 808 to generate an identifier for the completed template, which the identifier generator performs at 836. As described, in a particular implementation, the identifier generator 808 generates the identifier by concatenating the values in the completed template in the order defined by the rule. The resulting value is used as input to a hash function, which provides a hash value. In some cases, the hash value is directly used as the identifier, while in other cases it is combined with other information. For example, the hash value can include the domain as a prefix, where the prefixed hash value serves as the identifier.

Two processing paths are performed after 836. At 840, it is determined whether the generated identifier exists in a ledger (such as implemented as a database table). If not, the identifier and the rule values used to generate the identifier are stored at 844. In a specific scenario, the information stored can correspond to the information shown for the examples 700, 750 of FIG. 7. If the identifier exists, this indicates that the processed visual representation is either the original, or a duplicate or recreation, of a visual representation that already exists. This processing path ends at 848. In some cases, it can be useful to track what files are associated with an identifier, and so the operations at 844 or 848 can include storing an association between the processed visual representation, such as using another identifier of the visual representation, and the generated identifier.

In the other processing path from 836, at 858, the generated identifier can optionally be stored in association with the visual representation, such as a value of a metadata element for the visual representation. If the visual representation previously was assigned an identifier, and the identifier has not changed, this operation can also be skipped.

At 862, it is determined whether the visual representation is new or has been modified. If so, the new or modified visual representation is stored at 866, otherwise the process 800 ends at 870.

### Example 7- Example Implementation

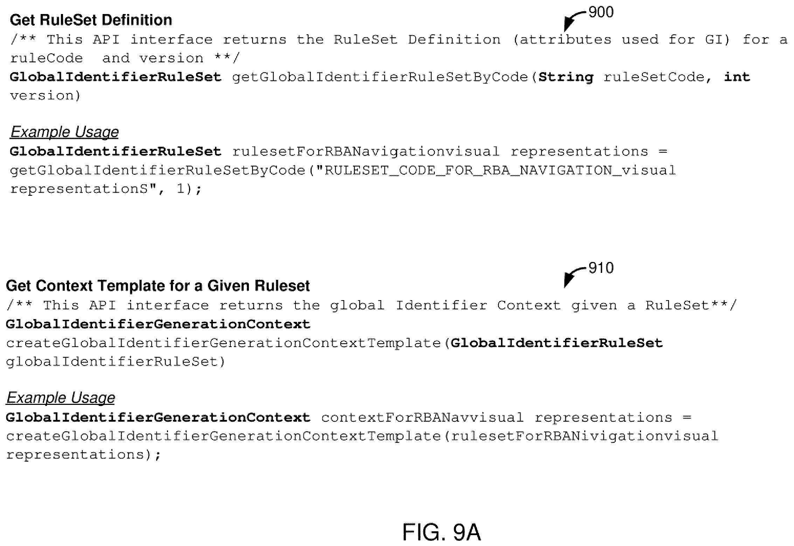

FIGS. 9A-9C provide example pseudocode that can be used in generating computing code useable to implement disclosed techniques. In FIG. 9A, pseudocode 900 provides an example API interface to obtain a ruleset definition. The API takes arguments of a string representing a code for a ruleset and a version identifier. FIG. 9A also provides pseudocode 910 that obtains a temple for a ruleset. The API takes an argument corresponding to an identifier for the ruleset.

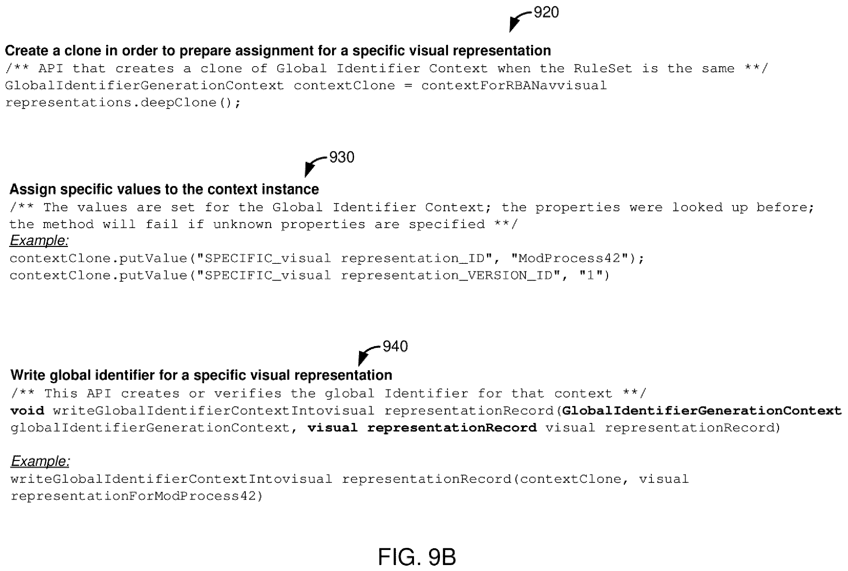

Turning to FIG. 9B, pseudocode 920 provides an API that generates a copy, such as a clone, of the template that can be used to hold values for a visual representation to be processed. The template can be, for example, a JSON object, where values for a particular visual representation are inserted as values for keys provided in the JSON object. In other cases, the template is a combination of metadata for a particular visual representation and the information, such as in JSON format, used to store identifiers and property values. Creating a clone of the metadata for a visual representation can be more computationally efficient than, for instance, creating a new object and populating its metadata elements by reading the metadata of the visual representation.

Pseudocode 930 provides example uses of a "putValue" method that assigns metadata element values from the visual representation being processed to the template copy created using the pseudocode 920. The putValue method uses metadata values from the visual representation being processed that correspond to the metadata elements in the template. The metadata elements for which putValue should be executed can be determined from the template.

Pseudocode 940 provides an API that creates or verifies an identifier generated from the values assigned to the template using the putValue method of the pseudocode 940. The API takes arguments of the completed template and an object or object identifier in which the generated identifier will be stored.

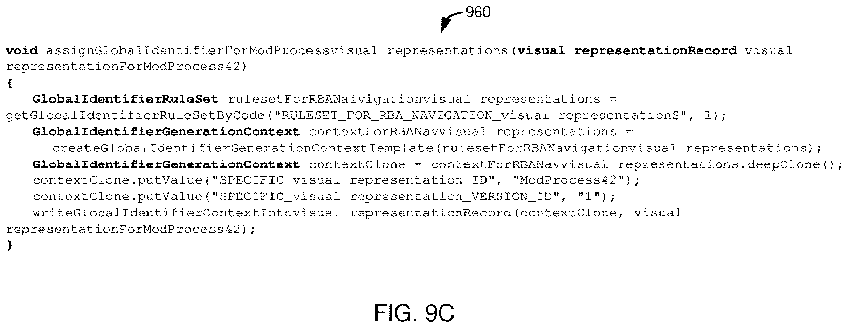

An overall function for assigning an identifier to a visual representation is provided in pseudocode 960 of FIG. 9C. The pseudocode 960 sequentially invokes the APIs or methods defined in the pseudocodes 900, 910, 920, and 930. The overall function for assigning identifiers takes as an argument an object holding metadata for the visual representation being processed, such as a JSON object. If the processed visual representation does not have a previously generated identifier, the representation record can be replaced by the clone. This clone includes the identifier and information such as the properties and property values used in generating the identifier.

### Example 8- Example Use of Visual Representation Identifiers and Rule Values

Disclosed identifiers and identifier generation techniques can be used in a variety of ways. For example, visual representations are often shared between multiple users or organizations. In one example, a software company designs a standard version of a process, which can then be modified by customers, which are each associated with visual representations. Changes may be made by the software company or the customers, and the disclosed identifiers can be used to confirm whether the visual representations are the same, in terms of expressing the same semantic concept - the same signified. As a practical example, an organization may wish to make sure their visual representation of a process model is up to date with respect to a best practices model. The use of the identifiers can be used to help ensure that the updated best practice model is still sufficiently conceptually similar to the organization's model that the updates to the best practices model are relevant to the organization.

Similarly, often references to content are lost when visual representations are transferred between systems or workspaces. That is, if a visual representation from a source system is transferred to a target system, the visual representation at the target system may not store information linking that visual representation to the visual representation of the source system. The disclosed identifiers can be used to determine that both systems have a visual representation representing the same signified, as indicated by having the same identifier value, even if other properties of the visual representation, such as its name, have changed.

Another scenario involves the recreation of visual representations. That is, a visual representation may be moved on, or deleted from, a system. It may then be recreated or reimported. The disclosed identifiers will result in the same identifier being created for the original version and the recreated version, provided they have the same metadata values for the content-independent semantic metadata elements used in generating the identifier - indicating that they relate to the same signified.

Being able to track visual representations with equivalent signifieds can be useful for consistency and update purposes. For example, if a visual representation is updated, other instances of the visual representations can be located based on the identifier. Similarly, lifecycle management use cases can include identifying and deleting visual representations having the same identifier value.

The disclosed techniques also provide a form of visual representation versioning, since changes to content-independent semantic metadata will generate new identifiers, and these identifiers can be linked to establish the relationship between the versions. In some scenarios, it may be desired to use a most recent version of a visual representation, and so existing copies of an older version of the visual representation can be identified and then links to those visual representations can be updated to refer to the updated version of the visual representation.

As noted, rulesets can be versioned, and so a given version of a visual representation can optionally be associated with multiple identifier values, corresponding to the use of the difficult rulesets. It can be determined whether identifier values were generated using the same ruleset version, such as by storing the ruleset version along with an identifier value (and optionally along with metadata element/property values used to generate the identifier value). Two visual representations can be compared to determine whether they are semantically equivalent by looking at identifiers generated using a common ruleset version.

Storing values used to generate identifiers can have a variety of uses. In some cases, it may be used to identify visual representations that are semantically similar to a given visual representation, but not identical. Accordingly, for the given visual representation, a subset of the values of the metadata elements used to generate the identifier are selected. A repository or ledger of identifiers and values used to generate the identifiers can be used to search for visual representations have those values. Identifiers of those visual representations can be provided and, for example, a user may retrieve and review those visual representations for potential relevance to the given visual representation.

### Example 9- Example Identifier Generation Operations

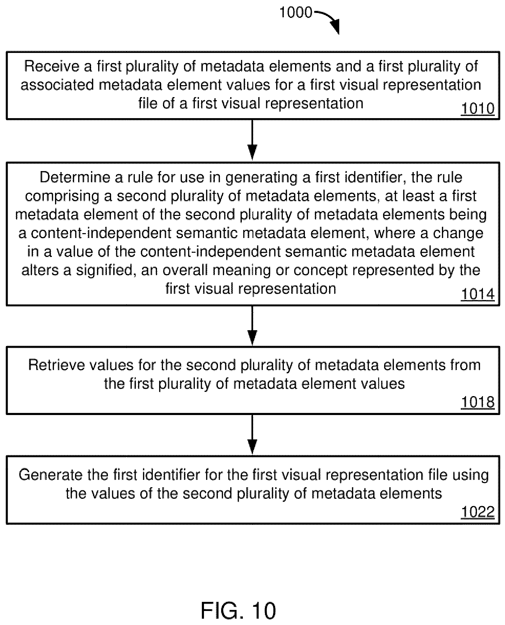

FIG. 10 provides a flowchart of a process 1000 for generating an identifier for a visual representation. At 1010, a first plurality of metadata elements and a first plurality of associated metadata elements values are received for a first visual representation file of a first visual representation. A rule is determined at 1014 to be used in the generation of a first identifier. This rule includes a second plurality of metadata elements, with at least one of these elements being a content-independent semantic metadata element. A change in a value of the content-independent semantic metadata elements alters a signified, which is an overall meaning or concept represented by the first visual representation.

At 1018, values for the second plurality of metadata elements are retrieved from the first plurality of metadata element values. The first identifier for the first visual representation file is generated at 1022 using the values of the second plurality of metadata elements.

### Example 10- Additional Examples

Example 1 provides a computing system that includes at least one memory and one or more hardware processing units coupled to the at least one memory. The system also includes one or more computer readable storage media storing computer-executable instructions. When executed, these instructions cause the computing system to perform operations.

These operations include receiving a first plurality of metadata elements and a first plurality of associated metadata element values for a first visual representation file of a first visual representation. The computing system determines a rule for use in generating a first identifier. This rule includes a second plurality of metadata elements, with at least a first metadata element of the second plurality of metadata elements being a content-independent semantic metadata element. A change in a value of the content-independent semantic metadata element alters a signified, an overall meaning or concept represented by the first visual representation. The system retrieves values for the second plurality of metadata elements from the first plurality of metadata element values and generates the first identifier for the first visual representation file using the values of the second plurality of metadata elements.

Example 2 is the computing system of Example 1, where the first visual representation has a first type and the first rule is defined for the first type. The operations further include receiving a third plurality of metadata elements and a third plurality of associated metadata element values for a second visual representation file having a second visual representation of a second type. The second type is different from the first type.

The system determines a second rule defined for the second type. The second rule is different than the first rule and includes a fourth plurality of metadata elements. At least a second metadata element of the fourth plurality of metadata elements is a content-independent semantic metadata element and is different than the at least a first metadata element of the second plurality of metadata elements. Values are retrieved for the fourth plurality of metadata elements from the third plurality of metadata element values and a second identifier is generated for the second visual representation file using the values for the fourth plurality of metadata elements.

Example 3 is the computing system of Example 2, where the operations further include receiving a fifth plurality of metadata elements and a fifth plurality of associated metadata element values for a third visual representation file of a third visual representation having the first type. The system retrieves values for the second plurality of metadata elements from the fifth plurality of metadata element values and generates a third identifier for the third visual representation file using the values of the fifth plurality of metadata elements. It is determined that the third identifier is different than the first identifier and, based on determining that the third identifier is different than the first identifier, the first visual representation file and the third visual representation file are associated as versions of the first visual representation.

Example 4 is the computing system of Example 2 or Example 3, where the operations further include receiving a fifth plurality of metadata elements and a fifth plurality of associated metadata element values for a third visual representation file of a third visual representation having the first type. Values are retrieved for the second plurality of metadata elements from the fifth plurality of metadata element values and a third identifier is generated for the third visual representation file using the values of the fifth plurality of metadata elements. The system then determines that the third identifier is the same as the first identifier.

Example 5 is the computing system of Example 4, where the third visual representation file has visual elements that differ from visual elements of the first visual representation file.

Example 6 is the computing system of any of Examples 2-5, where the first rule is associated with a first version of a ruleset. The operations further include retrieving a third rule defined for a second version of the ruleset, retrieving values for a fifth plurality of metadata elements from the first plurality of metadata element values, and generating a third identifier for the first visual representation file using the values of the fifth plurality of metadata elements and the third rule.

Example 7 is the computing system of any of Examples 1-6, where the operations include storing the first identifier in an electronic ledger.

Example 8 is the computing system of Example 7, where values of the second plurality of metadata elements are stored in the electronic ledger in association with the first identifier.

Example 9 is the computing system of Example 7 or Example 8, where the operations include storing an identifier of, or used to determine, the first rule in the electronic ledger in association with the first identifier.

Example 10 is the computing system of any of Examples 1-9, where generating a first identifier includes combining the values for the second plurality of metadata elements to provide a first combined value and generating the first identifier using the first combined value.

Example 11 is the computing system of Example 10, where generating the first identifier includes using the first combined value as input to a hash function to provide a hash value.

Example 12 is the computing system of Example 11, where generating the first identifier further includes combining an identifier of a domain comprising the rule with the hash value to provide the first identifier.

Example 13 is the computing system of any of Examples 1-12 where the operations include storing the first identifier in metadata of the first visual representation files.

Example 14 is the computing system of any of Examples 1-13 where the operations include storing identifiers of the second plurality of elements in association with the corresponding values of the second plurality of metadata elements in metadata for the first visual representation file.

Example 15 is the computing system of any of Examples 1-14, where the first visual representation is classified in a domain, and the generating a first identifier includes prefixing an identifier generated from the values of the second plurality of metadata elements with an identifier of the domain to provide the first identifier.

Example 16 is the computing system of any of Examples 1-15, where the operations include receiving a first request to identify visual representation files, retrieving at least a portion of the values for the second plurality of metadata elements, and determining one or more visual representation files that comprise the same values as the values of a proper subset of the second plurality of metadata elements.

Example 17 is the computing system of any of Examples 1-16, where the operations further include receiving a request to determine whether at least two visual representation files are semantically equivalent. The computing system compares an identifier value of a first visual representation file of the at least two visual representation files generated using a first value of a first content-independent semantic metadata element with an identifier value of a second visual representation file of the at least two visual representation files generated using a second value of a second content-independent semantic metadata value. The second content-independent metadata element can be the same as, or different than, the first content-independent metadata element and the second value of the second content-independent semantic metadata element can be the same as, or different than, the first value of the first content-independent semantic metadata element. In response to the request, when the first and second identifiers are the same, the computing system returns an indication of semantic equivalence or returns an indication of semantic inequivalence otherwise.

Example 18 provides a method, implemented in a computing system comprising at least one hardware processor and at least one memory coupled to the at least one hardware processor. The method includes receiving a first plurality of metadata elements and a first plurality of associated metadata element values for a first visual representation file of a first visual representation having a first type, determining a first rule defined for the first type, retrieving values for the second plurality of metadata elements from the first plurality of metadata element values, and generating a first identifier for the first visual representation file using the values of the second plurality of metadata elements.

Example 19 is the method of Example 18, further including receiving a third plurality of metadata elements and a third plurality of associated metadata element values for a second visual representation file having a second visual representation having a second type, determining a second rule defined for the second type, retrieving values for the fourth plurality of metadata elements from the third plurality of metadata element values, and generating a second identifier for the second visual representation file using the values for the fourth plurality of metadata elements.

Example 20 provides one or more non-transitory computer readable storage media. The one or more non-transitory computer readable storage media includes computer-executable instructions that, when executed by a computing system comprising at least one memory and at least one hardware processor coupled to the at least one memory, cause the computing system to perform several operations. These operations include receiving a first plurality of metadata elements and a first plurality of associated metadata element values for a first visual representation file of a first visual representation having a first type, determining a first rule defined for the first type, retrieving values for the second plurality of metadata elements from the first plurality of metadata element values, and generating a first identifier for the first visual representation file using the values of the second plurality of metadata elements. The operations also include receiving a third plurality of metadata elements and a third plurality of associated metadata element values for a second visual representation file having a second visual representation having a second type, determining a second rule defined for the second type, retrieving values for the fourth plurality of metadata elements from the third plurality of metadata element values, and generating a second identifier for the second visual representation file using the values for the fourth plurality of metadata elements.

### Example 11 - Computing Systems

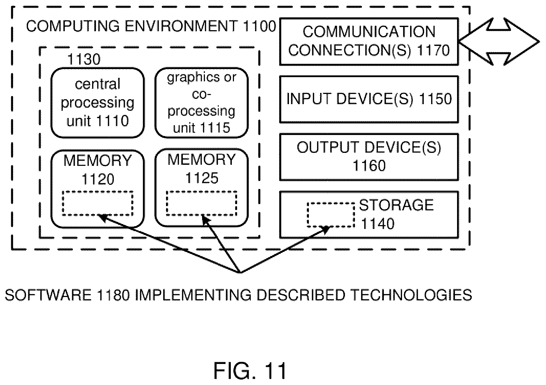

FIG. 11 depicts a generalized example of a suitable computing system 1100 in which the described innovations may be implemented. The computing system 1100 is not intended to suggest any limitation as to scope of use or functionality of the present disclosure, as the innovations may be implemented in diverse general-purpose or special-purpose computing systems.

With reference to FIG. 11, the computing system 1100 includes one or more processing units 1110, 1115 and memory 1120, 1125. In FIG. 11, this basic configuration 1130 is included within a dashed line. The processing units 1110, 1115 execute computer-executable instructions, such as for implementing technologies described in Examples 1-17. A processing unit can be a general-purpose central processing unit (CPU), processor in an application-specific integrated circuit (ASIC), or any other type of processor. In a multiprocessing system, multiple processing units execute computer-executable instructions to increase processing power. For example, FIG. 11 shows a central processing unit 1110 as well as a graphics processing unit or co-processing unit 1115. The tangible memory 1120, 1125 may be volatile memory (e.g., registers, cache, RAM), non-volatile memory (e.g., ROM, EEPROM, flash memory, etc.), or some combination of the two, accessible by the processing unit(s) 1110, 1115. The memory 1120, 1125 stores software 1180 implementing one or more innovations described herein, in the form of computer-executable instructions suitable for execution by the processing unit(s) 1110, 1115.

A computing system 1100 may have additional features. For example, the computing system 1100 includes storage 1140, one or more input devices 1150, one or more output devices 1160, and one or more communication connections 1170. An interconnection mechanism (not shown) such as a bus, controller, or network interconnects the components of the computing system 1100. Typically, operating system software (not shown) provides an operating environment for other software executing in the computing system 1100, and coordinates activities of the components of the computing system 1100.

The tangible storage 1140 may be removable or non-removable, and includes magnetic disks, magnetic tapes or cassettes, CD-ROMs, DVDs, or any other medium which can be used to store information in a non-transitory way, and which can be accessed within the computing system 1100. The storage 1140 stores instructions for the software 1180 implementing one or more innovations described herein.

The input device(s) 1150 may be a touch input device such as a keyboard, mouse, pen, or trackball, a voice input device, a scanning device, or another device that provides input to the computing system 1100. The output device(s) 1160 may be a display, printer, speaker, CD-writer, or another device that provides output from the computing system 1100.

The communication connection(s) 1170 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules or components include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

In various examples described herein, a module (e.g., component or engine) can be "coded" to perform certain operations or provide certain functionality, indicating that computer-executable instructions for the module can be executed to perform such operations, cause such operations to be performed, or to otherwise provide such functionality. Although functionality described with respect to a software component, module, or engine can be carried out as a discrete software unit (e.g., program, function, class method), it need not be implemented as a discrete unit. That is, the functionality can be incorporated into a larger or more general-purpose program, such as one or more lines of code in a larger or general-purpose program.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Example 12 - Cloud Computing Environment

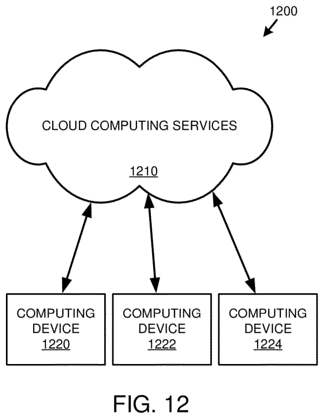

FIG. 12 depicts an example cloud computing environment 1200 in which the described technologies can be implemented. The cloud computing environment 1200 comprises cloud computing services 1210. The cloud computing services 1210 can comprise various types of cloud computing resources, such as computer servers, data storage repositories, networking resources, etc. The cloud computing services 1210 can be centrally located (e.g., provided by a data center of a business or organization) or distributed (e.g., provided by various computing resources located at different locations, such as different data centers and/or located in different cities or countries).

The cloud computing services 1210 are utilized by various types of computing devices (e.g., client computing devices), such as computing devices 1220, 1222, and 1224. For example, the computing devices (e.g., 1220, 1222, and 1224) can be computers (e.g., desktop or laptop computers), mobile devices (e.g., tablet computers or smart phones), or other types of computing devices. For example, the computing devices (e.g., 1220, 1222, and 1224) can utilize the cloud computing services 1210 to perform computing operators (e.g., data processing, data storage, and the like).

### Example 13 - Implementations

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media, such as tangible, non-transitory computer-readable storage media, and executed on a computing device (e.g., any available computing device, including smart phones or other mobile devices that include computing hardware). Tangible computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example, and with reference to FIG. 11, computer-readable storage media include memory 1120 and 1125, and storage 1140. The term computer-readable storage media does not include signals and carrier waves. In addition, the term computer-readable storage media does not include communication connections (e.g., 1170).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, C#, Java, Perl, JavaScript, Python, R, Ruby, ABAP, SQL, XCode, GO, Adobe Flash, or any other suitable programming language, or, in some examples, markup languages such as html or XML, or combinations of suitable programming languages and markup languages. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present, or problems be solved.

The technologies from any example can be combined with the technologies described in any one or more of the other examples. **In** view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the scope and spirit of the following claims.

## Claims

1. A computing system comprising:
at least one memory;
one or more hardware processing units coupled to the at least one memory; and
one or more computer readable storage media storing computer-executable instructions that, when executed, cause the computing system to perform operations comprising:
receiving a first plurality of metadata elements and a first plurality of associated metadata element values for a first visual representation file of a first visual representation;
determining a rule for use in generating a first identifier, the rule comprising a second plurality of metadata elements, at least a first metadata element of the second plurality of metadata elements being a content-independent semantic metadata element, where a change in a value of the content-independent semantic metadata element alters a signified, an overall meaning or concept represented by the first visual representation;
retrieving values for the second plurality of metadata elements from the first plurality of metadata element values; and
generating the first identifier for the first visual representation file using the values of the second plurality of metadata elements.

2. The computing system of claim 1, wherein the first visual representation has a first type and the first rule is defined for the first type, the operations further comprising:
receiving a third plurality of metadata elements and a third plurality of associated metadata element values for a second visual representation file having a second visual representation having a second type, the second type being different from the first type;
determining a second rule defined for the second type, the second rule being different than the first rule and comprising a fourth plurality of metadata elements, at least a second metadata element of the fourth plurality of metadata elements being a content-independent semantic metadata element and being different than the at least a first metadata element of the second plurality of metadata elements;
retrieving values for the fourth plurality of metadata elements from the third plurality of metadata element values; and
generating a second identifier for the second visual representation file using the values for the fourth plurality of metadata elements;
and/or
the operations further comprising:
receiving a fifth plurality of metadata elements and a fifth plurality of associated metadata element values for a third visual representation file of a third visual representation having the first type;
retrieving values for the second plurality of metadata elements from the fifth plurality of metadata element values;
generating a third identifier for the third visual representation file using the values of the fifth plurality of metadata elements;
determining that the third identifier is different than the first identifier; and
based on determining that the third identifier is different than the first identifier, associating the first visual representation file and the third visual representation file as versions of the first visual representation.

3. The computing system of claim 1 or 2, the operations further comprising:
receiving a fifth plurality of metadata elements and a fifth plurality of associated metadata element values for a third visual representation file of a third visual representation having the first type;
retrieving values for the second plurality of metadata elements from the fifth plurality of metadata element values;
generating a third identifier for the third visual representation file using the values of the fifth plurality of metadata elements; and
determining that the third identifier is the same as the first identifier.

4. The computing system of any one of the preceding claims, wherein the third visual representation file has visual elements that differ from visual elements of the first visual representation file.

5. The computing system of any one of the preceding claims, wherein the first rule is associated with a first version of a ruleset, the operations further comprising:
retrieving a third rule defined for a second version of the ruleset;
retrieving values for a fifth plurality of metadata elements from the first plurality of metadata element values, wherein the fifth plurality of metadata elements comprise a content-independent semantic metadata element that is different that the at least one content-independent semantic metadata element of the second plurality of metadata elements; and
generating a third identifier for the first visual representation file using the values of the fifth plurality of metadata elements and the third rule.

6. The computing system of any one of the preceding claims, the operations further comprising:
storing the first identifier in an electronic ledger.

7. The computing system of any one of the preceding claims, the operations further comprising:
storing the values of the second plurality of metadata elements in the electronic ledger in association with the first identifier;
and/or
the operations further comprising:
storing an identifier of, or used to determine, the first rule in the electronic ledger in association with the first identifier.

8. The computing system of any one of the preceding claims, wherein generating a first identifier comprising combining the values for the second plurality of metadata elements to provide a first combined value and generating the first identifier using the first combined value.

9. The computing system of any one of the preceding claims, wherein generating the first identifier comprises using the first combined value as input to a hash function to provide a hash value;
wherein generating the first identifier optionally further comprises combining an identifier of a domain comprising the rule with the hash value to provide the first identifier.

10. The computing system of any one of the preceding claims, the operations further comprising:
storing the first identifier in metadata of the first visual representation file;
and/or
the operations further comprising:
storing identifiers of the second plurality of elements in association with the corresponding values of the second plurality of metadata elements in metadata for the first visual representation file.

11. The computing system of any one of the preceding claims, wherein the first visual representation is classified in a domain, and the generating a first identifier comprises prefixing an identifier generated from the values of the second plurality of metadata elements with an identifier of the domain to provide the first identifier.

12. The computing system of any one of the preceding claims, the operations further comprising:
receiving a first request to identify visual representation files;
retrieving at least a portion of the values for the second plurality of metadata elements; and
determining one or more visual representation files that comprise the same values as the values of a proper subset of the second plurality of metadata elements;
and/or
the operations further comprising:
receiving a request to determine whether at least two visual representation files are semantically equivalent;
comparing an identifier value of a first visual representation file of the at least two visual representation files generated using a first value of a first content-independent semantic metadata element with an identifier value of a second visual representation file of the at least two visual representation files generated using a second value of a second content-independent semantic metadata value, wherein the second content-independent metadata element is the same as, or different than, the first content-independent metadata element and the second value of the second content-independent semantic metadata element is the same as, or different than, the first value of the first content-independent semantic metadata element; and
in response to the request, when the first and second identifiers are the same, returning an indication of semantic equivalence or returning an indication of semantic inequivalence otherwise.

13. A method, implemented in a computing system comprising at least one hardware processor and at least one memory coupled to the at least one hardware processor, the method comprising:
receiving a first plurality of metadata elements and a first plurality of associated metadata element values for a first visual representation file of a first visual representation having a first type;
determining a first rule defined for the first type, the first rule comprising a second plurality of metadata elements, at least a first metadata element of the second plurality of metadata elements being a content-independent semantic metadata element, where a change in a value of the content-independent semantic metadata element alters a signified, an overall meaning or concept represented by the first visual representation;
retrieving values for the second plurality of metadata elements from the first plurality of metadata element values; and
generating a first identifier for the first visual representation file using the values of the second plurality of metadata elements.

14. The method of claim 13, further comprising:
receiving a third plurality of metadata elements and a third plurality of associated metadata element values for a second visual representation file having a second visual representation having a second type, the second type being different from the first type;
determining a second rule defined for the second type, the second rule being different than the first rule and comprising a fourth plurality of metadata elements, at least a second metadata element of the fourth plurality of metadata elements being a content-independent semantic metadata element and being different than the at least a first metadata element of the second plurality of metadata elements;
retrieving values for the fourth plurality of metadata elements from the third plurality of metadata element values; and
generating a second identifier for the second visual representation file using the values for the fourth plurality of metadata elements.

15. One or more non-transitory computer readable storage media comprising:
computer-executable instructions that, when executed by a computing system comprising at least one memory and at least one hardware processor coupled to the at least one memory, cause the computing system to receive a first plurality of metadata elements and a first plurality of associated metadata element values for a first visual representation file of a first visual representation having a first type;
computer-executable instructions that, when executed by the computing system, cause the computing system to determine a first rule defined for the first type, the first rule comprising a second plurality of metadata elements, at least a first metadata element of the second plurality of metadata elements being a content-independent semantic metadata element, where a change in a value of the content-independent semantic metadata element alters a signified, an overall meaning or concept represented by the first visual representation;
computer-executable instructions that, when executed by the computing system, cause the computing system to retrieve values for the second plurality of metadata elements from the first plurality of metadata element values;
computer-executable instructions that, when executed by the computing system, cause the computing system to generate a first identifier for the first visual representation file using the values of the second plurality of metadata elements;
computer-executable instructions that, when executed by the computing system, cause the computing system to receive a third plurality of metadata elements and a third plurality of associated metadata element values for a second visual representation file having a second visual representation having a second type, the second type being different from the first type;
computer-executable instructions that, when executed by the computing system, cause the computing system to determine a second rule defined for the second type, the second rule being different than the first rule and comprising a fourth plurality of metadata elements, at least a second metadata element of the fourth plurality of metadata elements being a content-independent semantic metadata element and being different than the at least a first metadata element of the second plurality of metadata elements;
computer-executable instructions that, when executed by the computing system, cause the computing system to retrieve values for the fourth plurality of metadata elements from the third plurality of metadata element values; and
computer-executable instructions that, when executed by the computing system, cause the computing system to generate a second identifier for the second visual representation file using the values for the fourth plurality of metadata elements.
